# EUROPEAN PATENT APPLICATION

(11) **EP 3 913 428 A1**
(43) Date of publication of application: **24.11.2021**
(21) Application number: 20749428.7
(22) Date of filing: 17.01.2020
(51) Int. Cl.: G02F 1/161, G02F 1/153

(54) **ELECTROCHROMIC DEVICE AND MANUFACTURING METHOD, HOUSING AND ELECTRONIC DEVICE**

(30) Priority: 02.02.2019 CN 201920187616 U; 02.02.2019 CN 201910106667
(71) Applicant: GUANGDONG OPPO MOBILE TELECOMMUNICATIONS CORP., LTD., Dongguan, Guangdong 523860 (CN)
(72) Inventor: YANG, Xin, Dongguan, Guangdong 523860 (CN)
(74) Representative: Manitz Finsterwald Patent- und Rechtsanwaltspartnerschaft mbB
(86) International application number: PCT/CN2020/072840
(87) International publication number: WO 2020/156254

(57) **Abstract**

Provided is an electrochromic device. The electrochromic device comprises: a first substrate and a second substrate which are provided opposite each other, the first substrate and the second substrate each having an electrode layer, the electrode layers being located between the first substrate and the second substrate; and supports fixedly provided on one side of the first substrate or the second substrate having the electrode layer.

## Description

### CROSS-REFERENCE TO RELATED APPLICATION

This application claims priority to and benefits of Chinese Patent Application Serial No. 201910106667.2 and Chinese Patent Application Serial No. 201920187616.2 both filed with the National Intellectual Property Administration of PRC on February 2, 2019, the entire content of which is incorporated herein by reference.

### FIELD

The present disclosure relates to the field of production of components of electronic equipment, and more particularly to an electrochromic device and a producing method thereof, a shell and electronic equipment.

### BACKGROUND

Electrochromism refers to such a phenomenon that optical properties (such as reflectivity, transmittance, absorptivity, etc.) of a material undergo stable and reversible changes under the action of an external electric field, which appears as reversible changes of color and transparency in appearance. A device made of a material with the electrochromic property is known as an electrochromic device, which at present is mainly used in industries such as automobiles, construction, display, and aviation.

However, the existing electrochromic device and its manufacturing method, shell, and electronic equipment still need to be improved.

### SUMMARY

In a first aspect of the present disclosure, there is provided an electrochromic device. The electrochromic device includes: a first baseplate; a second baseplate opposite to the first baseplate; a first electrode layer provided on the first baseplate and arranged between the first baseplate and the second baseplate; a second electrode layer provided on the second baseplate and arranged between the first baseplate and the second baseplate; and a support, fixed on a first surface of the first baseplate provided with the first electrode layer or a first surface of the second baseplate provided with the second electrode layer. Therefore, the color of the electrochromic device changes uniformly, and the electrochromic device is not only applicable to planar equipment, but also to curved equipment, so that the planar equipment and the curved equipment using this electrochromic device have uniform color in appearance.

In a second aspect of the present disclosure, there is provided a method for producing an electrochromic device. In some embodiments of the present disclosure, the method includes: providing a first baseplate and a second baseplate; providing a first electrode layer on the first baseplate and providing a second electrode layer on the second baseplate; and fixing a support on a first surface of the first baseplate where the first electrode layer is provided or on a first surface of the second baseplate where the second electrode layer is provided. Therefore, using this simple method, an electrochromic device with uniform color change can be obtained, and the electrochromic device is not only applicable to planar equipment, but also to curved equipment, so that the planar equipment and the curved equipment using this electrochromic device have uniform color in appearance.

In a third aspect of the present disclosure, there is provided a shell. In some embodiments of the present disclosure, the shell includes an electrochromic device as described in the first aspect. Therefore, the shell has all the features and advantages of the electrochromic device as described in the first aspect, which will not be elaborated herein. In general, the shell has uniform color in appearance, and the shell is not only applicable to planar equipment, but also to curved equipment.

In a fourth aspect of the present disclosure, there is provided electronic equipment. In some embodiments of the present disclosure, the electronic equipment includes a shell as described in the third aspect and a main board, the main board is provided with a control circuit, and the control circuit is electrically connected with an electrochromic device in the shell. Therefore, the electronic equipment has all the features and advantages of the shell as described in the third aspect, which will not be elaborated herein. In general, the electronic equipment has uniform color in appearance, and the electronic equipment is not only applicable to planar equipment, but also to curved equipment.

### BRIEF DESCRIPTION OF THE DRAWINGS

Fig. 1 is a schematic diagram illustrating an electrochromic device according to an embodiment of the present disclosure;
Fig. 2 is a schematic diagram illustrating a partial structure of an electrochromic device according to an embodiment of the present disclosure;
Fig. 3 is a schematic diagram illustrating an electrochromic device according to an embodiment of the present disclosure;
Fig. 4 is a schematic diagram illustrating an electrochromic device according to another embodiment of the present disclosure;
Fig. 5 is a top view of a partial structure of an electrochromic device according to an embodiment of the present disclosure;
Fig. 6 is a schematic diagram illustrating an electrochromic device according to an embodiment of the present disclosure;
Fig. 7 is a schematic diagram illustrating an electrochromic device according to another embodiment of the present disclosure;
Fig. 8 is a schematic diagram illustrating an electrochromic device according to another embodiment of the present disclosure;
Fig. 9 is a schematic diagram illustrating an electrochromic device according to another embodiment of the present disclosure;
Fig. 10 is a schematic diagram illustrating an electrochromic device according to another embodiment of the present disclosure;
Fig. 11 is a schematic diagram illustrating an electrochromic device according to another embodiment of the present disclosure;
Fig. 12 is a schematic flow chart illustrating a method for producing an electrochromic device according to an embodiment of the present disclosure;
Fig. 13 is a schematic diagram illustrating electronic equipment according to an embodiment of the present disclosure;
Fig. 14 is a schematic diagram illustrating electronic equipment according to an embodiment of the present disclosure;
Fig. 15 is a schematic diagram illustrating electronic equipment according to an embodiment of the present disclosure;
Fig. 16 is a schematic diagram illustrating electronic equipment according to another embodiment of the present disclosure;
Fig. 17 is a schematic diagram illustrating a partial structure of electronic equipment according to an embodiment of the present disclosure;
Fig. 18 is a schematic diagram illustrating electronic equipment according to an embodiment of the present disclosure;
Fig. 19 is a schematic diagram illustrating electronic equipment according to another embodiment of the present disclosure;
Fig. 20 is a schematic diagram illustrating electronic equipment according to another embodiment of the present disclosure;
Fig. 21 is a schematic diagram illustrating electronic equipment according to another embodiment of the present disclosure;
Fig. 22 is a schematic diagram illustrating a shell according to an embodiment of the present disclosure;
Fig. 23 is a schematic flow chart illustrating a method for producing an electrochromic device according to an embodiment of the present disclosure; and
Fig. 24 is a schematic flow chart illustrating a method for producing an electrochromic device according to another embodiment of the present disclosure.

Reference Numerals:
100: first baseplate; 200: second baseplate; 300: electrochromic functional layer; 310: first electrode layer; 320: electrochromic layer; 330: second electrode layer; 340: ion storage layer; 350: electrolyte layer; 400: optical adhesive layer; 500: release layer; 600: shell baseplate; 10: support; 20: sealant; 30: fixing structure; 31: limiting pillar; 40: reinforcing substrate; 50: electrode; 60: substrate; 1000: shell; 2000: electronic equipment.

### DETAILED DESCRIPTION

Embodiments of the present application will be described in detail below with reference to drawings, in which same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

Embodiments of the present disclosure seek to solve at least one of the problems existing in the related art to at least some extent.

The present disclosure is completed based on the inventor's following findings.

At present, the color change of the existing electrochromic devices is not uniform, which affects the appearance of electronic equipment using such electrochromic device. After in-depth research and a large number of experiments, the inventor found that this is mainly caused by structural defects of the electrochromic device. Specifically, the existing electrochromic device is usually composed of two baseplates and an electrochromic functional layer disposed between the two baseplates. When the thickness of the baseplate is thinner, the baseplate will deform in the process of providing the electrochromic functional layer on the baseplate, which results in the thickness of the electrochromic material between the two baseplates uneven, such that when the color of the electrochromic device changes, the color in a thicker region is darker, while the color in a thinner region is lighter, so the color change of the electrochromic device is not uniform. In addition, the inventor found that the two baseplates of the existing electrochromic device are planar, so the existing electrochromic device is usually used in planar equipment, which limits the application of the electrochromic device in curved equipment. Moreover, the inventor found that if the two baseplates of the electrochromic device are directly made into curved structure, the baseplates are more likely to deform due to the existence of the curved structure, and thus the thickness of the electrochromic material between the two baseplates is not uniform, resulting in significantly uneven color change in the curved equipment using such electrochromic device, thereby affecting the appearance of the curved equipment.

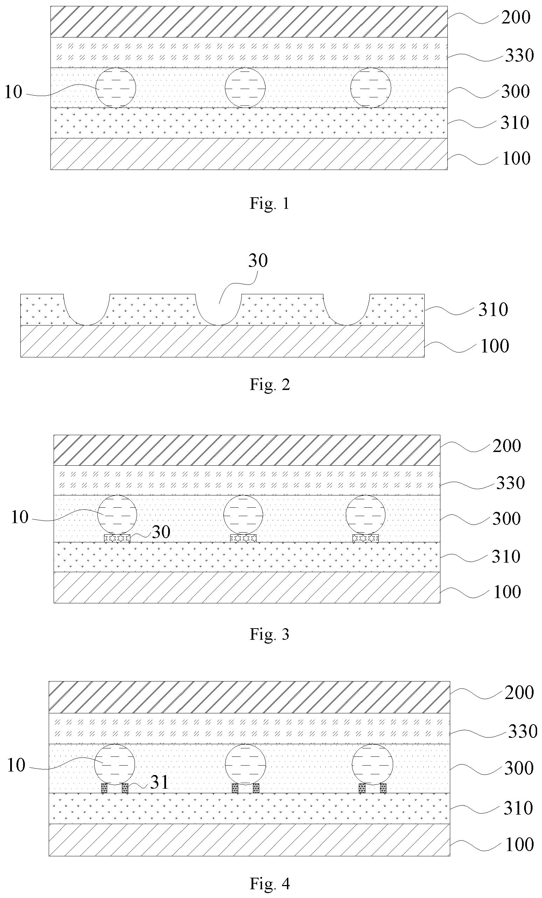

In view of this, in a first aspect of the present disclosure, there is provided an electrochromic device. In some embodiments of the present disclosure, referring to Fig. 1, the electrochromic device includes a first baseplate 100, a second baseplate 200 and a support 10. The first baseplate 100 is opposite to the second baseplate 200. The first baseplate 100 and the second baseplate 200 each have an electrode layer. Specifically, the first baseplate 100 is provide with a first electrode layer 310, the second baseplate 200 is provide with a second electrode layer 330, and both the first electrode layer 310 and the second electrode layer 330 are disposed between the first baseplate 100 and the second baseplate 200. The support 10 is fixed on a first surface of the first baseplate 100 provided with the first electrode layer 310 or a first surface of the second baseplate 200 provided with the second electrode layer 330. Therefore, the color of the electrochromic device changes uniformly, and the electrochromic device is not only applicable to planar equipment, but also to curved equipment, so that the planar equipment and the curved equipment using this electrochromic device have uniform color in appearance.

In some embodiments of the present disclosure, referring to Fig. 1, the electrochromic functional layer 300 is disposed between the first baseplate 100 and the second baseplate 200 and in contact with the support 10. Therefore, the electrochromic device has good electrochromic function.

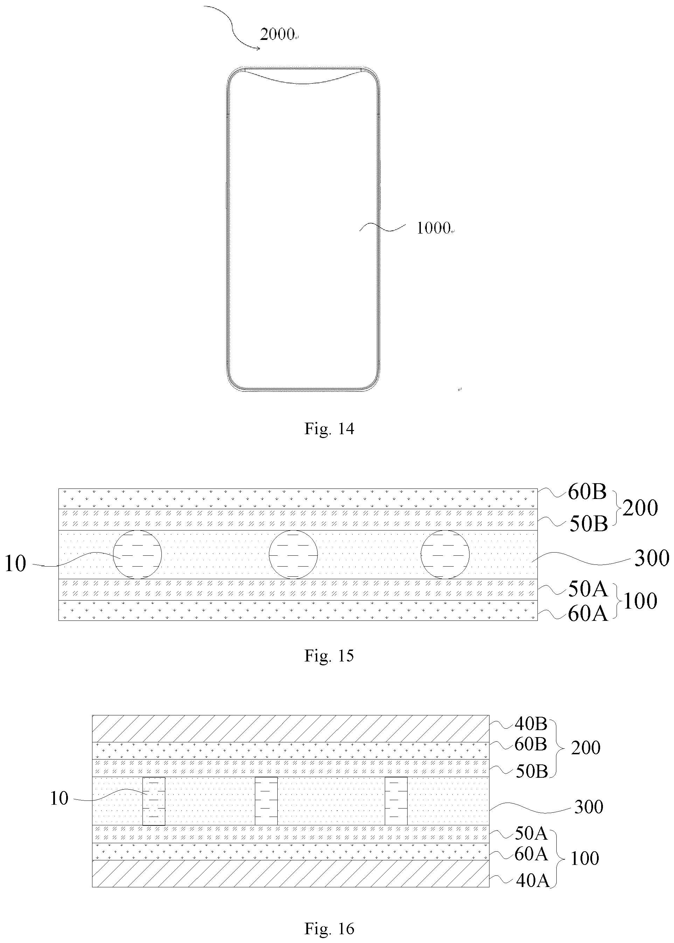

Alternatively, referring to Fig. 15, the electrochromic device includes a first baseplate 100 and a second baseplate 200, which are opposite to each other. The first baseplate 100 includes a first substrate 60A and a first electrode 50A, the second baseplate 200 includes a second substrate 60B and a second electrode 50B, the first electrode 50A is disposed on a first surface of the first substrate 60A of the first baseplate 100 facing the second substrate 60B, the second electrode 50B is disposed on a first surface of the second substrate 60B of the second baseplate 200 facing the first substrate 60A, the electrochromic functional layer 300 is disposed between the first electrode 50A and the second electrode 50B, and the support 10 is disposed between the electrochromic functional layer 300 and the electrodes. In this way, when the electrochromic functional layer 300 contains a liquid or gel state material, the support 10 can be located in the electrochromic functional layer 300. Therefore, the electrochromic device is thinner and has uniform color change, and when it is applied to electronic equipment, the thickness of the electronic equipment will not be significantly increased.

For ease of understanding, the electrochromic device according to embodiments of the present application will be briefly described.

As mentioned above, in the existing electrochromic device, when the baseplate is thinner, the baseplate will deform in the process of providing the electrochromic functional layer on the baseplate, which results in the thickness of the electrochromic material between the two baseplates uneven, such that when the color of the electrochromic device changes, the color in a thicker region is darker, while the color in a thinner region is lighter, so the color change of the electrochromic device is not uniform. In addition, the two baseplates of the existing electrochromic device are planar, which limits the application of the electrochromic device in curved equipment. Moreover, if the two baseplates of the electrochromic device are directly made into curved structure, the baseplates are more likely to deform due to the existence of the curved structure, and thus the thickness of the electrochromic material between the two baseplates is not uniform, resulting in significantly uneven color change in the curved equipment using such electrochromic device, thereby affecting the appearance of the curved equipment.

In some embodiments of the present disclosure, by providing the support on the surface of the baseplate where the electrode layer is provided, the electrochromic functional layer and the baseplates are supported by the support to prevent the baseplates of the electrochromic device from deforming, so that the electrochromic material between the two baseplates has a uniform thickness, thereby improving the problem of uneven color change of the electrochromic device. Furhter, the electrochromic device according to embodiments of the present disclsorue is not only applicable to planar equipment, but also to curved equipment, so that the planar equipment and the curved equipment using this electrochromic device have uniform color in appearance, which promotes the development of the curved equipment with the electrochromic function.

Hereinafter, various structures of the electrochromic device will be described in detail according to specific embodiments of the present disclosure.

In some embodiments of the present disclosure, the method and material for forming the support 10 are not particularly limited. For example, the material for forming the support 10 may include at least one selected from glass, silicon, and a polymer. Therefore, the support formed by the above-mentioned materials can play a good supporting role on the electrochromic functional layer and the baseplates, so that the electrochromic device can change color uniformly. Further, the support formed by the silicon or polymer has good flexibility, which is beneficial to the formation of an electrochromic device with a curved structure. According to specific embodiments of the present disclosure, the polymer may be a resin, polystyrene or a photosensitive adhesive.

In some embodiments of the present disclosure, support 10 may be spherical or columnar. In this way, the support can play a good supporting role on the electrochromic functional layer and the baseplates. In some embodiments of the present disclosure, the support 10 has a thickness in a range of 0.02 to 0.2 mm. As a result, the supporting function of the support on the electrochromic functional layer and the baseplates can be further improved, and the uniformity of the color change of the electrochromic device can be improved. In some embodiments of the present disclosure, a cross-sectional dimension of the support 10 may be in a range of 0.02 to 0.2 mm. Therefore, the support has a good supporting effect, and at the same time, the color change effect of the electrochromic device will not be affected due to the excessive size of the support. It should be noted that the above-mentioned cross-sectional dimension may be a diameter of the cross section (when the cross section is circular or elliptical) or a length of any side of the cross section (when the cross section is polygonal). Specifically, referring to Fig. 16, the support 10 may be columnar, and the columnar support may have a cross-sectional dimension of 0.15 mm and a height of 0.1 mm.

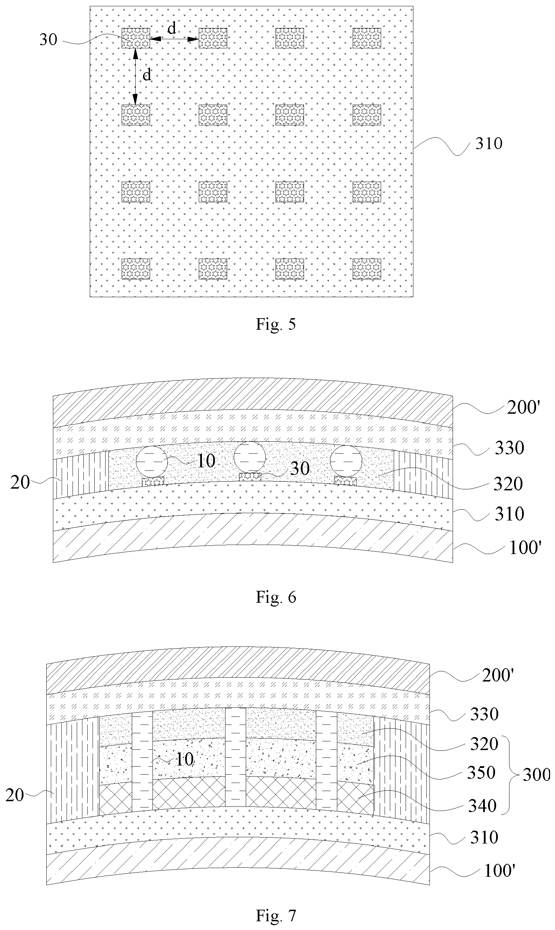

In some embodiments of the present disclosure, the support 10 may include glass beads, silicon spheres, or soluble resin beads. In this case, the thickness of the support is the diameter of the cross section of the glass beads, the silicon spheres or the soluble resin beads. In some embodiments of the present disclosure, the support 10 may be made of the photosensitive adhesive or polystyrene, in this case, the support 10 may be columnar (refer to Fig. 7), and the columnar support may have a cross-sectional dimension of 0.15 mm and a height of 0.1 mm. Therefore, the support can play a good supporting role.

In some embodiments of the present disclosure, the support 10 may also be integrated with the first baseplate 100 or the second baseplate 200. Specifically, the first surface of the first baseplate 100 or the first surface of the second baseplate 200 may have a concave-convex structure, and the support 10 is formed by a convex part of the concave-convex structure (this case is not shown in the figures). Therefore, a part of the baseplate can be used as the support, thereby ensuring the uniformity of the color change of the electrochromic device. Specifically, the first surface of the baseplate where the electrode layer needs to be provided may be etched to form the concave-convex structure. The sequence of providing the electrode layer and etching the baseplate is not particularly limited, as long as the continuity of the electrode layer is ensured, and the electrode layers on the first and second baseplates do not short-circuit when the first and second baseplates are assembled together.

The number of supports is not particularly limited, and can be designed by those skilled in the art according to specific conditions, as long as the supports are evenly distributed in the electrochromic functional layer and can well support the electrochromic functional layer and the baseplates, so that the electrochromic device can achieve uniform color change.

In some embodiments of the present disclosure, when the support 10 is made of the photosensitive adhesive or polystyrene, the support 10 can be directly fixed on the electrode layer to achieve the supporting function on the baseplates and the electrochromic functional layer. In some embodiments of the present disclosure, when the support 10 is made of the glass beads, silicon spheres, or soluble resin beads, a fixing structure may also be provided on the electrode layer to fix the support, so as to ensure the stability of the support.

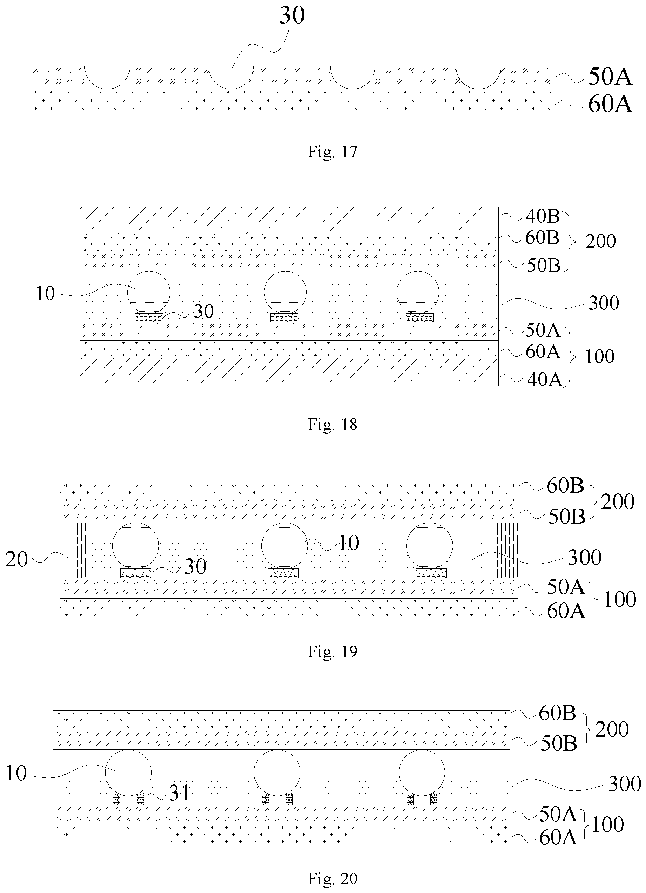

In some embodiments of the present disclosure, referring to Fig. 2 to Fig. 4 or referring to Fig. 17 to Fig. 21, in order to further improve the stability of the support on the baseplate and ensure that the supports are evenly distributed on the baseplate, it is also possible to provide at least one fixing structure 30 between the support and the baseplate, and via the fixing structure 30, the support 10 is fixed on the first surface of the first baseplate 100 where the first electrode layer is provided or on the first surface of the second baseplate 200 where the second electrode layer is provided. In this way, the stability of the support is ensured. The specific shape of the fixing structure is not particularly limited, and can be designed by those skilled in the art according to specific conditions, as long as the support can be fixed on the electrode layer. In some embodiments of the present disclosure, referring to Fig. 2 and Fig. 17, the fixing structure 30 may be a groove. When the support is dispersed, the support can be fixed in virtue of a bottom and side walls of the groove. Specifically, the groove is defined at a surface of the first electrode layer 310 away from the first baseplate 100, and the support 10 is located in the groove (the support is not shown in Fig. 2 and Fig. 17). Therefore, the support can be fixed on the first baseplate by the groove. A cross-sectional shape of the groove is not particularly limited, and can be designed by those skilled in the art according to specific conditions, as long as the support can be fixed. For example, in some embodiments of the present disclosure, the groove may be circular, elliptical, quadrilateral or irregularly polygonal.

In some embodiments of the present disclosure, referring to Fig. 3 or referring to Fig. 18 to Fig. 21, the fixing structure 30 may be a bump. Therefore, the support can be fixed by the bump. The cross-sectional shape of the bump is also not particularly limited, which can be designed by those skilled in the art, as long as the support can be fixed. For example, in some embodiments of the present disclosure, the bump may be circular, annular, elliptical, quadrilateral or irregularly polygonal. When the cross section of the bump is circular, annular, elliptical, quadrilateral or irregularly polygonal, there is a contact surface between the fixing structure and the support, and the support is adhered to the fixing structure through the contact surface. When the cross section of the fixing structure is annular, the fixing structure has a hollow part at a central ragion thereof, so that the support may be stuck in the hollow part of the fixing structure, and the support can be adhered to the fixing structure through the contact surface between the support and the fixing structure, thereby further improving the fixing stability of the support.

In some embodiments of the present disclosure, referring to Fig. 4 or Fig. 20, when the fixing structure 30 is the bump, the fixing structure may further include at least two limiting pillars 31 spaced apart from each other, and a distance between two adjacent limiting pillars 31 of the same fixing structure is suitable for accommodating and fixing the support 10. In this way, the support can be fixed on the baseplate through the limiting pillars. On the basis of fixing the support by the limiting pillars, the support can also be adhered to the limiting pillars through a contact surface between the support and the limiting pillars, thereby further improving the fixing stability of the support.

In some embodiments of the present disclosure, when the fixing structure 30 is the bump, the thickness of the fixing structure 30 may be in a range of 5 to 10 µm. Therefore, the fixing structure has a relatively thin thickness, such that the thickness of the electrochromic device is not significantly increased, and the fixing structure can effectively fix the support.

In some embodiments of the present disclosure, when the fixing structure is the groove, the depth of the groove can be designed according to an actual size of the support to ensure that the groove does not affect the use of the electrode layer and can fix the support well. For example, the groove may extend into the first baseplate 100, as long as it is ensured that the remaining part of the electrode layer except the groove 30 can be connected into a whole. For example, the electrode layer may be a hollow electrode, and the groove 30 may be located at a hollow part of the hollow electrode. In addition, an adhesive can be applied between a bottom of the groove and the support. For example, after the support is dispersed in the groove, the adhesive is applied on a side of the support away from the groove and then is melted via such as heating, such that the melted adhesive will automatically flow into the groove to bond the bottom of the groove with the support after cured.

In some embodiments of the present disclosure, referring to Fig. 5 and Fig. 18, a plurality of fixing structures 30 may be provided on the electrode layer, and the plurality of the fixing structures 30 are arranged on the electrode layer in an array. For example, the fixing structures 30 are arranged on the first electrode layer 310 in an array, and a distance (represented by "d" in Fig. 5) between two adjacent fixing structures 30 may be in a range of 0.5 mm to 1 cm. The fixing structure 30 may be a groove or a bump. Therefore, the fixing structures are arranged uniformly, and each support is fixed on the electrode layer through the fixing structure, so that the supports arranged on the fixing structures can be uniformly fixed on the first electrode layer to evenly support the baseplate, thereby making the baseplate have good mechanical strength and making the color of the electrochromic device change uniformly. In some specific embodiments of the present disclosure, the distance between two adjacent fixing structures 30 may be 1 mm, 2 mm, 3 mm, 4 mm, 5 mm, 6 mm, 7 mm, 8 mm, or 9 mm.

In some embodiments of the present disclosure, a cross-sectional area of the fixing structure 30 may be 30 to 50% of that of the support 10. Therefore, it can be ensured that each support is fixed by a fixing structure to ensure the stability of the support. For example, according to a specific embodiment of the present disclosure, when the cross-sectional diameter of the support 10 is 0.1 mm, and the cross-section of the fixing structure 30 is circular, the cross-sectional diameter of the fixing structure 30 may be 0.05 to 0.07 mm.

In some embodiments of the present disclosure, when the fixing structure 30 is the bump, the fixing structure 30 may include an adhesive layer, and the material for forming the adhesive layer may include at least one selected from a thermosetting adhesive, a hot melt adhesive, a light curable adhesive and a two-component adhesive. Therefore, besides using its own shape to fix the support, the fixing structure can also use an adhesive force of the adhesive layer to bond the support with the electrode layer, thereby further strengthening a binding force between the support and the fixing structure. The hot melt adhesive may be polyurethane, and the light curable adhesive may be a UV adhesive. In some embodiments of the present disclosure, the plurality of fixing structures may be provided by spraying or printing. Specifically, according to the shape and arranging distance of the fixing structures, the fixing structures are directly provided on the electrode layer. For example, when the fixing structure is made of the hot melt adhesive, thermosetting adhesive or the light curable adhesive, the fixing structure may be directly provided on the electrode layer by spraying or printing.

In some embodiments of the present disclosure, the electrochromic functional layer may include a layered structure containing an electrochromic material, and such a structure is usually not formed by an all-solid-state material. For example, for an electrochromic device containing such as viologens (small organic molecules) or organic polymers, no matter whether it is necessary to add an electrolyte layer or an ion storage layer, the electrochromic device always includes a liquid or gel-state material, such as a colloidal electrolyte mixed with the electrochromic material. Under this premise, since the gel-state material is easy to flow without a support, the uniform thickness cannot be guaranteed, such that the color change of the electrochromic device is not uniform. By using the support, on the one hand, a rigid support can be provided between the first baseplate and the second baseplate, and on the other hand, the electrochromic functional layer can be prevented from flowing too violently, and the support confines the gel-state material or the colloidal material around the support.

In some embodiments of the present disclosure, referring to Fig. 6 to Fig. 9, the electrochromic functional layer 300 includes an electrochromic layer 320, and the electrochromic layer 320 may be made of at least one selected from an organic electrochromic small molecule material, an organic polymer, and an inorganic electrochromic material. Therefore, the electrochromic layer can be made of various kinds of materials as described above, so that the electrochromic layer has a wider source of materials. In some embodiments of the present disclosure, the organic electrochromic small molecule material may be viologens, the organic polymer may be polyaniline, polythiophene, etc., and the inorganic electrochromic material may be transition metal oxide, prussian blue, etc.

When the electrochromic layer 320 is made of the organic polymer, the electrochromic functional layer 300 may further include an ion storage layer 340 and an electrolyte layer 350. Similarly, when the electrochromic layer 320 is made of the inorganic electrochromic material, the electrochromic functional layer may also further include an electrolyte layer.

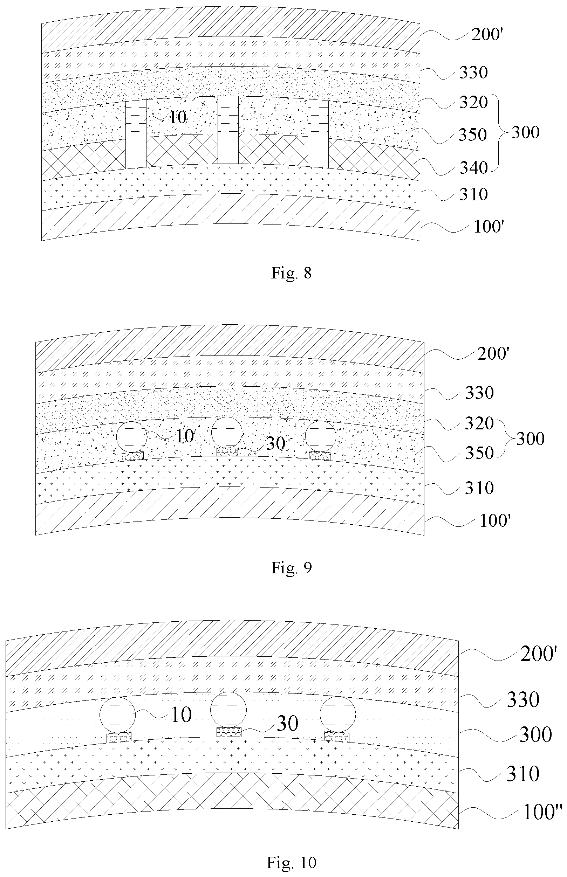

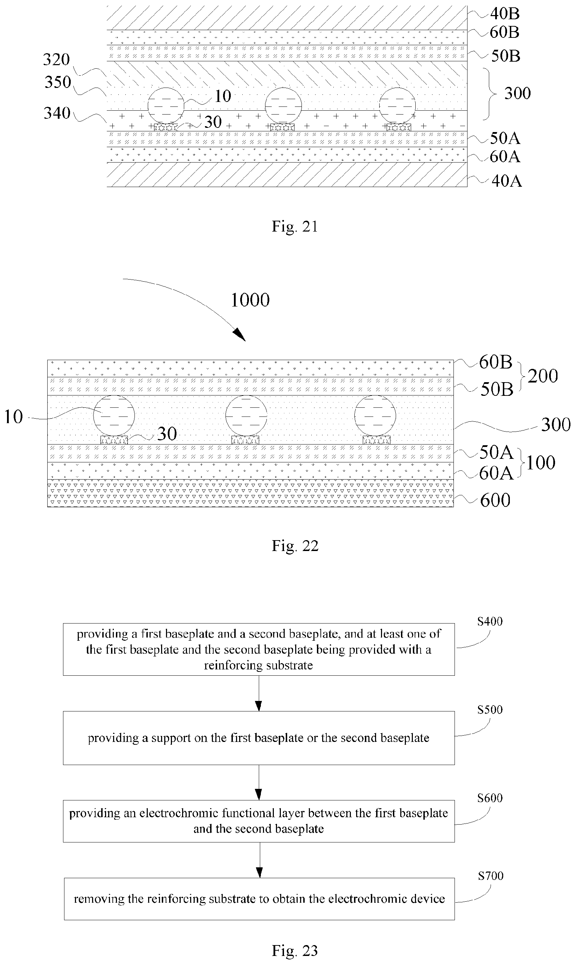

In some embodiments of the present disclosure, the specific height of the support 10 is not particularly limited, which can be adjusted by those skilled in the art according to actual conditions. For example, according to some specific embodiments of the present disclosure, referring to Fig. 1 and Fig. 7 or referring to Fig. 15 and Fig. 16, the support 10 is located between the first baseplate 100 and the second baseplate 200, an accommodating space is defined between the two baseplates via the support 10, and the electrochromic functional layer 300 is filled in the accommodating space. In other words, the height of the support 10 may be equal to the distance between the two baseplates, and the support 10 penetrates the whole electrochromic functional layer disposed between the two baseplates. Therefore, the support can realize the supporting function on the electrochromic functional layer and the baseplates, and ensure the uniform color change of the electrochromic device. Alternatively, according to some other embodiments of the present disclosure, referring to Fig. 8 and Fig. 9 or referring to Fig. 21, the height of the support 10 may be less than the thickness of the electrochromic functional layer 300. Specifically, the electrochromic functional layer may include a plurality of sublayers stacked in sequence, and among the plurality of sublayers, a sublayer with the strongest flowability is in contact with the support 10. For example, the electrochromic functional layer 300 may include the electrochromic layer 320, the ion storage layer 340 and the electrolyte layer 350 (referring to Fig. 8 and Fig. 21), and in such case, at least one of the electrolyte layer and the ion storage layer is in contact with the support 10. Therefore, the support can realize the supporting function on the electrochromic functional layer and the baseplates without affecting the display of the final electrochromic device.

In some embodiments of the present disclosure, referring to Fig. 19, the electrochromic device may further include a sealant 20, and the sealant 20 surrounds the outside of the electrochromic functional layer 300. Therefore, the electrochromic device has good sealing properties.

In some embodiments of the present disclosure, referring to Fig. 6, when the electrochromic layer 320 is made of the organic electrochromic small molecule material, the electrochromic layer 320 is disposed between the first electrode layer 310 and the second electrode layer 330, the sealant 20 surrounds the electrochromic layer 320, the support 10 is fixed on the first electrode layer 310 through the fixing structure 30, the accommodating space is defined between the two electrode layers via the support 10, and the electrochromic layer 320 is filled in the accommodating space. In this way, the support can play a supporting role on the electrochromic functional layer and the baseplates, prevent the baseplates from deforming when the electrochromic functional layer is fabricated on the baseplate, and ensure that the thickness of the electrochromic functional layer between the two baseplates is uniform, thereby making the color change of the electrochromic device uniform.

In some embodiments of the present disclosure, referring to Fig. 7, when the electrochromic layer 320 is made of the organic polymer, the electrochromic functional layer 300 may further include the ion storage layer 340 and the electrolyte layer 350, the ion storage layer 340 is disposed on a first surface of the first electrode layer 310 away from the first baseplate 100, the electrolyte layer 350 is disposed on a first surface of the ion storage layer 340 away from the first electrode layer 310, the electrochromic layer 320 is disposed between the electrolyte layer 350 and the second electrode layer 330, the support 10 is fixed on the first electrode layer 310, and the accommodating space is defined between the two electrode layers via the support 10, the electrochromic functional layer 300 is filled in the accommodating space, and the sealant 20 surrounds the electrochromic functional layer 300. In this way, the support can play a supporting role on the electrochromic functional layer and the baseplates, prevent the baseplates from deforming when the electrochromic functional layer is fabricated on the baseplate, and ensure that the thickness of the electrochromic functional layer between the two baseplates is uniform, thereby making the color change of the electrochromic device uniform.

According to some other embodiments of the present disclosure, referring to Fig. 8, when the electrochromic layer 320 is made of the organic polymer, the support 10 is fixed on the first electrode layer 310, and the thickness of the support 10 is smaller than that of the electrochromic functional layer 300, the ion storage layer 340 and the electrolyte layer 350 are in contact with the support 10, and the electrochromic layer 320 covers the support 10. Similarly, in these embodiments, a sealant may also be included to seal the electrochromic functional layer between the two baseplates. In this way, the support can fix the sublayer with stronger flowability of the electrochromic functional layer, and ensure the uniform thickness between the two baseplates, thereby making the color change of the electrochromic device uniform.

In some embodiments of the present disclosure, referring to Fig. 9, when the electrochromic layer 320 is made of the inorganic electrochromic material, the electrochromic functional layer 300 may further include an electrolyte layer 350, and the electrolyte layer 350 is disposed on the first surface of the first electrode layer 310 away from the first baseplate 100. The electrochromic layer 320 is disposed between the electrolyte layer 350 and the second electrode layer 330, the support 10 is fixed on the first electrode layer 310 via the fixing structure 30, the thickness of the support 10 and the fixing structure 30 is less than that of the electrochromic functional layer 300, the electrolyte layer 350 is in contact with the support 10, and the electrochromic layer 320 covers the support 10. In this way, the support can play a certain fixing role on the electrolyte layer with the strongest fluidity, and ensure the uniform thickness between the two baseplates, thereby making the color change of the electrochromic device uniform.

According to some other embodiments of the present disclosure, when the electrochromic layer 320 is made of the inorganic electrochromic material, an accommodating space is defined between the two electrode layers via the support 10, the electrochromic functional layer 300 is filled in the accommodation space, and the sealant 20 wraps the electrochromic functional layer 300, thereby realizing the supporting function of the support on the electrochromic functional layer and the baseplates (this case is not shown in the figures).

In some embodiments of the present disclosure, both the first electrode layer 310 and the second electrode layer 330 are made of a transparent conductive material. Specifically, the transparent conductive material may include at least one selected from indium tin oxide (ITO), metal mesh, and nano-silver. Therefore, the first electrode layer and the second electrode layer have good electrical conductivity and high light transmittance.

In some embodiments of the present disclosure, the electrode layer is provided with the support 10 thereon, so that the electrochromic device can achieve uniform color change. In some embodiments of the present disclosure, the electrochromic device is not only applicable to planar equipment, but also to curved equipment. Specifically, when the electrochromic device is applied to the curved equipment, the first baseplate 100 and the second baseplate 200 are independently made of curved glass or a flexible material. In this way, an electrochromic device with a curved structure can be obtained, so that the curved equipment with an electrochromic function has uniform color in appearance. In some embodiments of the present disclosure, the flexible material for forming the first baseplate 100 and the second baseplate 200 may include at least one selected from polyethylene terephthalate (PET) and polyamide (PA). Therefore, it is easier and more convenient to use the flexible material to produce the first baseplate and the second baseplate with a curved structure.

In some embodiments of the present disclosure, referring to Fig. 6 to Fig. 9, for the cases where the electrochromic layer is made of different electrochromic materials, the first baseplate and the second baseplate may both be made of curved glass, that is, both the first baseplate 100' and the second baseplate 200' are made of curved glass. Therefore, an electrochromic device with a curved structure can be obtained.

According to some other embodiments of the present disclosure, referring to Fig. 10, the first baseplate may be made of a different material from that of the second baseplate, that is, the first baseplate 100" may be made of a flexible material, while the second baseplate 200' may be made of curved glass (as shown in Fig. 10). Alternatively, the first baseplate 100' may be made of curved glass, while the second baseplate 200" may be made of a flexible material (this case is not shown in drawings). The baseplate made of the flexible material has a relatively thin thickness. Therefore, using the flexible material to produce the baseplate, not only an electrochromic device with a curved structure can be obtained, but also the overall thickness of the electrochromic device can be reduced.

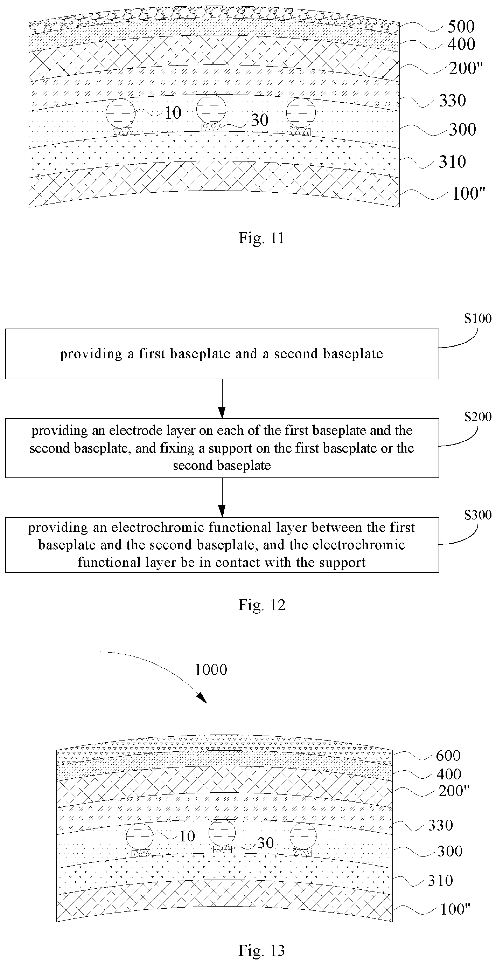

According to some other embodiments of the present disclosure, referring to Fig. 11, both the first baseplate and the second baseplate may be made of a flexible material, that is, both the first baseplate 100" and the second baseplate 200" are made of the flexible material. Therefore, the overall thickness of the electrochromic device can be further reduced, and an electrochromic device with a curved structure and a thinner thickness is obtained.

It should be noted that the case where the first baseplate and the second baseplate are made of different materials and the case where both the first baseplate and the second baseplate are made of a flexible material are both applicable to the cases where the electrochromic layer is made of different electrochromic materials. In other words, the electrochromic functional layer 300 as shown in Fig. 10 and Fig. 11 covers several cases where the electrochromic layer is made of the organic electrochromic small molecule material, the organic polymer or the inorganic electrochromic material, which will not be illustrated one by one.

In some embodiments of the present disclosure, referring to Fig. 1, the first baseplate 100 and the second baseplate 200 may independently have a thickness of 0.05 to 0.5 mm. In other words, referring to Fig. 15, the thickness of substrates 60 in the first baseplate 100 and the second baseplate 200 may be in the range of 0.05 to 0.5 mm. Therefore, an electrochromic device with a thinner thickness can be obtained. In some specific embodiments of the present disclosure, referring to Fig. 1, the thickness of the first baseplate 100 and that of the second baseplate 200 may independently be 0.1 mm, 0.2 mm, or 0.3 mm. In other words, referring to Fig. 15, the thickness of the baseplates 60 may be 0.1 mm, 0.2 mm, or 0.3 mm.

In some embodiments of the present disclosure, referring to Fig. 1, the first baseplate 100 and the second baseplate 200 made of the glass may independently have a thickness of 0.05 to 0.1 mm. Therefore, the overall thickness of the electrochromic device can be further reduced, and an electrochromic device having a thinner thickness can be obtained.

In some embodiments of the present disclosure, the first baseplate 100 and the second baseplate 200 made of the flexible material may dependently have a thickness of 0.05 to 0.1 mm. Therefore, the overall thickness of the electrochromic device can be further reduced, and an electrochromic device having a thinner thickness can be obtained. When the thickness of the first baseplate 100 and that of the second baseplate 200 are within the above range, the overall thickness of the electrochromic device can be controlled within a more appropriate range, which facilitates the subsequent attachment to the curved baseplate by means of lamination, etc., and avoids the occurrence of the cases where the lamination process is uneasy to perform due to too thick thickness or the device is easy to fall off due to weak lamination. According to specific embodiments of the present disclosure, the first baseplate 100 and the second baseplate 200 made of the flexible material may dependently have a thickness of 0.06 mm or 0.08 mm. In some embodiments of the present disclosure, when the first baseplate 100 and the second baseplate 200 are both made of the flexible material and dependently have a thickness of 0.05 mm, the overall thickness of the electrochromic device can reach 0.2 mm (taking the thickness of the electrochromic functional layer of 0.1 mm as an example), such thickness is relatively thin, and thus is beneficial to the application of the electrochromic device in the electronic equipment.

In other words, referring to Fig. 15, the substrate 60 may be made of at least one selected from the flexible organic material and glass. Therefore, an electrochromic device made of the glass or flexible organic material and having a thinner thickness can be obtained. In some embodiments of the present disclosure, the flexible organic material for producing the substrate 60 may be at least one selected from a covalent organic polymers (COP), polyethylene terephthalate (PET), and polyimide (PI).

In some embodiments of the present disclosure, the curved structure may be a 2.5D structure or a 3D structure. Therefore, the electrochromic device may have a wide range of applications.

In some embodiments of the present disclosure, when the first baseplate and the second baseplate are made of the flexible material, the baseplate can be made relatively thin, which is beneficial to the production of the electrochromic device with a thinner thickness. Alternatively, the first baseplate and the second baseplate can also be made of thinner glass, which can also make the electrochromic device have a thinner thickness. In some embodiments of the present disclosure, the electrochromic device is provided with the support and thus can achieve uniform color change even the thickness of the first baseplate and that of the second baseplate are both thin.

As mentioned above, the existing electrochromic device is relatively thick, the main reason is that the baseplate of the device needs to have a certain thickness to meet the requirements of the production process of the electrochromic device and to provide sufficient mechanical support. If the electrochromic device is directly produced based on a thinner baseplate, the production process will be more complicated and difficult, so it is difficult to realize an ultra-thin electrochromic device. Specifically, for electrochromic materials such as organic small molecules, if the thickness of the baseplate is less than 0.5 mm, the baseplate will deform during the provision of the electrochromic material due to the thinner thickness, such that a uniform chamber cannot be formed, resulting in uneven color change, thereby affecting the color changing effect of the electrochromic device. For another example, for the inorganic electrochromic material or the organic polymer, if the thickness of the baseplate is less than 0.5 mm, the assembly of the electrochromic device will be very complicated, and the mechanical strength of the baseplate with too small thickness is insufficient, so it is difficult to meet the requirements of the entire assembling process for the strength of the supporting baseplate.

In some embodiments of the present disclosure, the thickness of the first baseplate 100 and that of the second baseplate 200 may independently be 0.05 to 0.1 mm. Therefore, an electrochromic device with a significantly reduced thickness and uniform color change can be obtained. Specifically, it is possible to use thicker glass to produce the electrochromic device first, and then reduce the thickness of the thicker glass, so as to obtain a thinner electrochromic device.

Alternatively, at least one of the first baseplate and the second baseplate may further include a reinforcing substrate on a second surface thereof away from the electrochromic functional layer. For example, when the thickness of the first baseplate and that of the second baseplate are thinner, the reinforcing substrate can be provided on the second surface of the at least one of the thinner baseplates away from the electrochromic functional layer to serve as a supporting substrate, and a binder layer is provided between the reinforcing substrate and the at least one of the baseplates, such that by taking advantage of the supporting baseplate, it is more conducive to the uniformity of the electrochromic functional layer, and thus is more conducive to the color change uniformity of the electrochromic device, thereby obtaining an electrochromic device with a thinner thickness and uniform color change. In some embodiments of the present disclosure, the electrochromic device may include the reinforcing substrate to prevent deformation of the electrochromic device during transportation or handling, and during use of the electrochromic device, the reinforcing substrate just needs to be separated from the at least one of the baseplates, such as by dissolving and removing the binder layer between the reinforcing substrate and the at least one of the baseplates, so the operation is simple. Specifically, referring to Fig. 18, by arranging the baseplates 60 with a thinner thickness on the reinforcing substrates 40, the reinforcing substrates 40 can play a supporting role on the substrates 60 in the production of the electrochromic functional layer 300, such that the substrates 60 with a thinner thickness can meet the mechanical strength required for the production of the electrochromic functional layer 300, so as to ensure that the electrochromic functional layer produced thereby has a uniform thickness, thereby making the final electrochromic device have a thinner thickness and uniform color change. Binder layers (not shown in the figures) may be provided between the reinforcing substrates 40 and the substrates (i.e., the substrate 60A and substrate 60B shown in the figures) of the first baseplate 100 and second baseplate 200, such that the reinforcing substrates can be removed by dissolving the binder layers after the production of the electrochromic device or the subsequent assembly.

In some embodiments of the present disclosure, referring to Fig. 11, the electrochromic device may further include an optical adhesive layer 400 and a release layer 500, the optical adhesive layer 400 is disposed on the second surface of the second baseplate 200 (i.e., the second baseplate 200" shown in Fig. 11) away from the electrochromic functional layer 300, or the adhesive layer 400 is disposed on the second surface of the first baseplate 100 (i.e., the first baseplate 100" shown in Fig. 11) away from the electrochromic functional layer 300 (this case is not shown in the figures), and the release layer 500 is disposed on a surface of the optical adhesive layer 400 away from the electrochromic functional layer 300. Therefore, the electrochromic device can be stored independently, and when the electrochromic device is to be assembled with the shell and other structures, it just needs to tear off the release layer and attach the electrochromic device to the shell and other structures through the optical adhesive layer.

In some embodiments of the present disclosure, when the thickness of the first baseplate and that of the second baseplate are relatively thin, and the electrochromic device includes the reinforcing substrate, the reinforcing substrate may be removed when necessary. For example, the reinforcing substrate can be separated from the baseplate by dissolving and removing the binder layer between the reinforcing substrate and the baseplate.

In a second aspect of the present disclosure, there is provided a method for producing an electrochromic device. In some embodiments of the present disclosure, the electrochromic device produced by this method may be the electrochromic device as described hereinbefore, and thus has the same characteristics and advantages as the electrochromic device described hereinbefore, which will not be elaborated here.

In some embodiments of the present disclosure, referring to Fig. 12, the method includes the following operations.

At block S 100, a first baseplate and a second baseplate are provided.

In some embodiments of the present disclosure, in this step, the first baseplate and the second baseplate are provided. In some embodiments of the present disclosure, the first baseplate and the second baseplate each may have a planar structure or a curved structure, so that an electrochromic device with a planar structure or an electrochromic device with a curved structure can be formed, and thus the planar electrochromic device and the curved electrochromic device finally obtained through the subsequent steps both have uniform color change.

In some embodiments of the present disclosure, the first baseplate and the second baseplate each have the curved structure, and the first baseplate and the second baseplate may be independently made of curved glass or a flexible material. Specifically, the flexible material for forming the first baseplate and the second baseplate may include at least one selected from polyethylene terephthalate and polyamide. Therefore, it is easier and more convenient to use the flexible material to form the first baseplate and the second baseplate with the curved structure.

In some embodiments of the present disclosure, the first baseplate and the second baseplate having the curved structure may have a 2.5D structure or a 3D structure, so that the finally obtained electrochromic device has a wide range of applications. The thicknesses of the first baseplate and that of the second baseplate have been described in detail above, and will not be elaborated here.

At block S200, an electrode layer is disposed on each of the first baseplate and the second baseplate, and a support is fixed on the first baseplate or the second baseplate.

In some embodiments of the present disclosure, in this step, the electrode layer is disposed on each of the first baseplate and the second baseplate. Specifically, a first electrode layer is disposed on the first baseplate, a second electrode layer is disposed on the second baseplate, and the support is fixed on a first surface of the first baseplate where the first electrode layer is provided or on a first surface of the second baseplate where the second electrode layer is disposed. Therefore, the support may be formed between an electrochromic functional layer formed subsequently and the electrode layer, and the uniformity of a thickness of the electrochromic functional layer is improved by taking advantage of the supporting effects of the support on the two baseplates, thereby ensuring the uniform color change of the electrochromic device. The material for forming the electrode layers has been described in detail above, and will not be elaborated here.

The material, shape, thickness, cross-sectional dimension and arrangement of the support have been described in detail above, and will not be elaborated here.

According to some embodiments of the present disclosure, fixing the support includes etching the first baseplate or the second baseplate to form a concave-convex structure on the first baseplate or the second baseplate, and a convex part of the concave-convex structure constitutes the support. In this way, the support is obtained. In the finally obtained electrochromic device, the support can play a good supporting role on the baseplates and the electrochromic functional layer, so that the finally obtained electrochromic device has uniform color change, so as to obtain an electrochromic device with a curved structure or a thin electrochromic device with a planar structure.

It should be noted that the sequence of forming the support by etching and providing the electrode layers on the baseplates is not particularly limited, which can be adjusted by those skilled in the art according to the actual situations, as long as the continuity of the electrode layer is not affected, and the entire device does not short-circuit.

According to some other embodiments of the present disclosure, the support may also be a bump provided on the baseplate. For example, the support may be a columnar bump. Specifically, the support may be made of a photosensitive adhesive, and the photosensitive adhesive is provided on the electrode layer by printing to form the columnar support. Alternatively, a photosensitive adhesive layer is first formed on the electrode layer, and then on the basis of the photosensitive adhesive layer, a support having the above described shape and arrangement is formed by a patterning process. In this way, the support can be directly provided on the electrode layer.

Alternatively, the support may also be made of a polymer. For example, the support may be made of polystyrene. In this case, the support may be formed by printing. Alternatively, a polystyrene film layer may be formed on the electrode layer first, and then on the basis of the polystyrene film layer, the support having the above described shape and arrangement is formed by using the patterning process. In this way, the support enables the finally obtained electrochromic device to have uniform color change, so as to obtain an electrochromic device with a curved structure or a thin electrochromic device with a planar structure.

According to some other embodiments of the present disclosure, there may also be a fixing structure between the support and the baseplate. In this way, the stability of the support is ensured, the support may be evenly distributed on the baseplate, and the support enables the finally obtained electrochromic device to have uniform color change, so as to obtain an electrochromic device with a curved structure or a thin electrochromic device with a planar structure. The fixing structure may be disposed on the electrode layer of the baseplate. When the electrode layer is a hollow electrode, the fixing structure may also be disposed on a hollow region of the hollow electrode.

Specifically, fixing the support includes: providing a fixing structure on the baseplate; dispersing the support on the baseplate provided with the fixing structure; and removing a part of the support not fixed by the fixing structure. The support is dispersed on the electrode, such that a part of the support is dispersed on the fixing structure and a part of the support is dispersed on a region of the electrode not provided with the fixing structure, the part of the support dispersed on the fixing structure is adhered to the fixing structure, and the part of the support not dispersed on the fixing structure is removed, so as to obtain the evenly arranged and fixed support. For example, the part of the support not fixed by the fixing structure can be removed by purging. The manner for dispersing the support is not particularly limited. For example, in some embodiments of the present disclosure, the dispersion of the support may be achieved by sandblasting.

In some embodiments of the present disclosure, the fixing structure may be a groove, and the groove may be formed by etching at least one of the electrode layer and the baseplate using a patterning process. Therefore, the support can be stuck by the groove so as to fix the support on the electrode layer.

In some embodiments of the present disclosure, the fixing structure may be a bump, and the provision of the fixing structure on the electrode layer may be achieved by spraying, screen printing, printing or etching. Therefore, the support can be fixed by the bump. For example, the bump may be an annular bump. Alternatively, the fixing structure may be composed of at least two limiting pillars spaced apart from each other, and a distance between two adjacent limiting pillars of the same fixing structure is suitable for accommodating and fixing the support. In these ways, the fixation of the support is realized.

In some embodiments of the present disclosure, when the fixing structure is the bump, the fixing structure may include an adhesive layer. After dispersing the support, the method may further include: curing the fixing structure to fix the support distributed on the fixing structure, so as to further improve the stability of the support. A curing treatment may be selected for the fixing structure according to the specific material of the adhesive layer, so as to cure the adhesive layer and adhere the support to the fixing structure at the same time. For example, the adhesive layer may be cured by light curing, thermal curing or the like. Alternatively, for the hot melt adhesive, the fixing structure may be heated to make its surface have a certain viscosity so as to adhere the support to the fixing structure, and the fixed connection between the fixing structure and the support may be realized after cooling.

The specific material of the adhesive layer has been described in detail above, and will not be elaborated here. In some embodiments of the present disclosure, when the adhesive layer is a hot melt adhesive layer, a thermosetting adhesive layer or a light curable adhesive layer, the fixing structure may be directly arranged by spraying or printing. In some embodiments of the present disclosure, when the fixing structure includes a two-component adhesive, a complete adhesive layer may be formed first, and then the fixing structure with a specific shape may be formed by a patterning process. Specifically, a mask is used to shield a region of the two-component adhesive layer that needs to form the fixing structure, and an unshielded region of the two-component adhesive layer is exposed, developed, etched and removed, so as to obtain the fixing structure with a certain shape and arranged in an array. Specifically, a two-component adhesive with a photocuring property and a thermal curing property may be used. Therefore, the adhesive layer may be semi-cured in the process of exposure and development, and at the same time be etched into the shape of the fixing structure, while maintaining a surface of the adhesive layer away from the electrode layer still has a certain viscosity. After the support is disposed on the fixing structure, the adhesive layer is cured so as to realize the fixation of the support on the fixing structure.

In some embodiments of the present disclosure, when the fixing structure is a groove, after dispersing the support on the electrode layer, an adhesive layer may be disposed on the support, and the adhesive layer may be heated to allow the adhesive layer to flow to an interface between the groove and the support, so as to adhere the support to the groove, thereby further improving the stability of the support.

The cross-sectional shape, thickness, arrangement, and cross-sectional area of the fixing structure have been described in detail above, and will not be elaborated here.

At S300: an electrochromic functional layer is provided between the first baseplate and the second baseplate, and the electrochromic functional layer is in contact with the support.

In some embodiments of the present disclosure, in this step, the electrochromic functional layer is disposed between the first baseplate and the second baseplate, and the electrochromic functional layer is in contact with the support. The material and specific structure of the electrochromic functional layer as well as the positional relationship of the electrochromic functional layer with a specific structure relative to the support have been described in detail above, and thus will not be elaborated here. The manner for providing the electrochromic functional layer is not particularly limited, which can be designed by those skilled in the art according to specific conditions. In some embodiments of the present disclosure, an accommodating space may be defined between the two baseplates via the support formed above. In this case, the electrochromic functional layer may be filled in the accommodation space. Alternatively, according to some other embodiments of the present disclosure, the electrochromic functional layer includes a plurality of sublayers stacked in sequence, and the thickness of the support or a total thickness of the support and the fixing structure may be less than the thickness of the electrochromic functional layer. In this step, a sublayer with strongest flowability in the electrochromic functional layer is in contact with the support, so as to realize the supporting function of the support on the electrochromic functional layer and the baseplates and obtain an electrochromic device with uniform color change. For example, at least one of the ion storage layer and the electrolyte layer may be in contact with the support.

For ease of understanding, the production of the electrochromic device will be illustrated below taking the electrochromic layer made of an organic electrochromic small molecule material as an example.

In some embodiments of the present disclosure, the baseplates (the first baseplate and the second baseplate) of the above-described electrochromic device may be large mother plates including a plurality of electrochromic units, and the first baseplate and the second baseplate may have a planar structure or a curved structure. When the first baseplate and the second baseplate both are glass baseplates and have the planar structure, the overall production of the electrochromic device may include the following operations.

Firstly, a first layer of transparent conductive material is deposited on a first glass, and the first electrode layer is formed based on the first layer of transparent conductive material through a patterning process; and a second layer of transparent conductive material is deposited on a second glass, and the second electrode layer is formed based on the second layer of transparent conductive material through a patterning process. The first glass and the second glass are both thicker glasses with a thickness of greater than 0.5 mm. Subsequently, the support is disposed on a first surface of the first electrode layer away from the first glass and fixed by the fixing structure. Then, the first glass provided with the support is assembled with the second glass provided with the second electrode layer. The assembled mother plates are cut into a plurality of independent preliminary electrochromic devices, after which the organic electrochromic small molecule material is filled between the two electrode layers of the preliminary electrochromic device, and sealed by a sealant. Subsequently, the first glass and the second glass in the preliminary electrochromic device are thinned to form the first baseplate and the second baseplate with a thinner thickness ranging from 0.05 to 0.1 mm, so as to obtain a thinner electrochromic device with uniform color change. alternatively, according to some other embodiments of the present disclosure, after the first glass provided with the support is assembled with the second glass provided with the second electrode layer, the first glass and the second glass may be thinned to form the first baseplate and the second baseplate with a thinner thickness, and then the thinned mother plates are cut into a plurality of independent preliminary electrochromic devices, after which the organic electrochromic small molecule material is filled between the two electrode layers of the preliminary electrochromic device, and sealed by a sealant, so as to obtain a thinner electrochromic device with uniform color change.

In some embodiments of the present disclosure, thicker glass baseplates may be used as the first baseplate and the second baseplate, and after the electrochromic device having the support is produced, the first baseplate and second baseplate are thinned to obtain a thin electrochromic device with uniform color change. In some embodiments of the present disclosure, when directly using thinner baseplates to produce the electrochromic device, that is, the first baseplate and the second baseplate are both flexible baseplates, or the first baseplate and the second baseplate are both thinner glass baseplates, a reinforcing substrate may be disposed via a binder layer on a second surface of at least one of the first baseplate and the second baseplate away from the electrochromic functional layer, such that under the supporting effect of the reinforcing substrate, the production of the electrochromic device having the support may be completed directly on the thinner baseplates, and finally the reinforcing substrate just needs to be separated from the baseplate by such as dissolving and removing the binder layer between the reinforcing substrate and the baseplate. Therefore, the operation is simple, and the thinner electrochromic device with uniform color change can be obtained.

Alternatively, in some embodiments of the present disclosure, referring to Fig. 23, the method includes the following operations.

At block S400, a first baseplate and a second baseplate are provided, and at least one of the first baseplate and the second baseplate is provided with a reinforcing substrate.

In this step, the first baseplate and the second baseplate are provided. In some embodiments of the present disclosure, the first baseplate and the second baseplate each have an electrode. The specific compositions of the first baseplate and the second baseplate have been described in detail above, and thus will not be elaborated here.

Specifically, referring to Fig. 21, the first baseplate and the second baseplate each may be provided with a reinforcing substrate 40 on a second surface thereof away from an electrochromic functional layer 300. Therefore, in the subsequent preparation of the electrochromic functional layer, the reinforcing substrates can play a supporting role on the substrates of the first baseplate and the second baseplate, so as to ensure that the substrates of the first baseplate and the second baseplate do not deform when the electrochromic functional layer is provided, thereby ensuring that the provided electrochromic functional layer has a uniform thickness, so that the finally obtained electrochromic device achieves uniform color change.

At block S500, a support is provided on the first baseplate or the second baseplate.

In this step, the support is provided on the first baseplate or the second baseplate. In some embodiments of the present disclosure, referring to Fig. 18, the support 10 is provided on a first surface of the first baseplate 100 where a first electrode 50A is provided. In this way, the support may be formed between the electrochromic functional layer formed subsequently and the first electrode, and by taking advantage of the supporting effect of the support on the substrates of the two baseplates, the uniformity of the thickness of the electrochromic functional layer can be further improved, and after the reinforcing substrates are removed in the subsequent step, the support can still play a certain supporting role to prevent ununiform color change caused by the flow of the electrochromic functional layer. In other words, the uniformity of the color change of the electrochromic device can be guaranteed.

In some embodiments of the present disclosure, when the support 10 is made of a photosensitive adhesive or polystyrene, the support 10 can be directly fixed on the electrode layer to realize the supporting function on the baseplates and the electrochromic functional layer. Specifically, when the support 10 is made of the photosensitive adhesive or polystyrene, the support 10 may be columnar, and a whole polystyrene layer or a whole photosensitive adhesive layer may be formed on the first baseplate or the second baseplate first, and then the support with a certain shape is formed by a photolithography technique. Alternatively, the support 10 with a certain shape (such as being columnar) may be directly formed by the polymer on the first baseplate or the second baseplate through such as printing.

In some embodiments of the present disclosure, when the support 10 is integrated with the first baseplate 100 or the second baseplate 200, the corresponding baseplate may be etched to form a concave-convex structure on its first surface where the electrode needs to be formed.

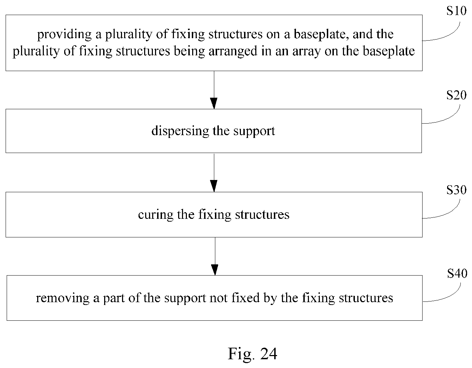

In some embodiments of the present disclosure, referring to Fig. 24, in order to further improve the stability of the support on the corresponding baseplate and ensure that the support is evenly distributed on the corresponding baseplate, a fixing structure may be added between the support and the corresponding baseplate. Specifically, the step of providing the support on the corresponding electrode may include the following operations.

At block S 10, a plurality of fixing structures are disposed on a baseplate, and the plurality of fixing structures are arranged in an array on the baseplate.

In this step, the plurality of fixing structures are disposed on the electrode of the baseplate, and the plurality of fixing structures are arranged in an array on the electrode. In some embodiments of the present disclosure, the specific shape and composition of the fixing structures have been described in detail above, and will not be elaborated here.

In some embodiments of the present disclosure, the fixing structures may further include an adhesive layer, and the material for forming the adhesive layer may include at least one selected from a thermosetting adhesive, a hot melt adhesive, a light curable adhesive, and a two-component adhesive. Therefore, the support can be bonded to the electrode through the adhesive layer. In some embodiments of the present disclosure, the provision of the plurality of fixing structures may be achieved by spraying or printing. Specifically, when the fixing structures are made of the hot melt adhesive, thermosetting adhesive or the light curable adhesive, the fixing structures may be directly provided on the electrode by spraying or printing. In some embodiments of the present disclosure, the plurality of fixing structures may be provided by a patterning process. Specifically, a whole adhesive layer is formed on the electrode, and then the fixing structures are formed on the basis of the adhesive layer through a patterning process. In the patterning process, a mask is used to shield a region of the adhesive layer that needs to form the fixing structures, and an unshielded region of the adhesive layer is exposed, developed, etched and removed, so as to obtain the fixing structures with a certain shape and arranged uniformly. For example, in some embodiments of the present disclosure, when the fixing structures are made of a two-component adhesive, the fixing structures may be formed by a patterning process. In some embodiments of the present disclosure, when the fixing structures are formed by a patterning process, a two-component adhesive may be selected to form the adhesive layer. Specifically, a two-component adhesive with a photocuring property and a thermal curing property may be used. Therefore, the adhesive layer may be semi-cured in the process of exposure and development, and at the same time be etched into the shape of the fixing structures, while maintaining a surface of the adhesive layer away from the electrode still has a certain viscosity. After the support is disposed on the fixing structures, the adhesive layer is cured so as to realize the fixation of the support on the fixing structures.

At block S20, the support is dispersed.

In this step, the support is dispersed on the electrode provided with the fixing structures. The manner for dispersing the support is not particularly limited. For example, in some embodiments of the present disclosure, the dispersion of the support may be achieved by sandblasting. In this way, the support can be disposed on the electrode, so that the support can be disposed on the fixing structures.

At block S30, the fixing structures are cured.

When the fixing structures include the adhesive layer, after the support is dispersed, the method may further include: curing the fixing structures. In some embodiments of the present disclosure, the fixing structures includes the adhesive layer, and the material for forming the adhesive layer includes at least one selected from the hot melt adhesive, thermosetting adhesive, the light curable adhesive, and the two-component adhesive. After the support is dispersed on the electrode, the support dispersed on the fixing structures is adhered to the fixing structures, and then a curing treatment may be selected for the fixing structures according to the specific material of the adhesive layer, so as to cure the adhesive layer and adhere the support to the fixing structures at the same time. For example, in some embodiments of the present disclosure, the adhesive layer may be cured by light curing, thermal curing or the like. Alternatively, for the hot melt adhesive, the fixing structures may be heated to make their surfaces have a certain viscosity so as to adhere the support to the fixing structures, and the fixed connection between the fixing structures and the support may be realized after cooling.

At block S40: a part of the support not fixed by the fixing structures is removed.

In this step, a part of the support which is not fixed is removed. In some embodiments of the present disclosure, the support is dispersed on the electrode, such that a part of the support is dispersed on the fixing structures and a part of the support is dispersed on a region of the electrode not provided with the fixing structures, the part of the support dispersed on the fixing structures is adhered to the fixing structures, and the part of the support not dispersed on the fixing structures is removed in this step, so as to obtain the evenly arranged and fixed support. For example, the part of the support not fixed by the fixing structures can be removed by purging.

At block S600: an electrochromic functional layer is provided between the first baseplate and the second baseplate.

In this step, the electrochromic functional layer is provided between the first baseplate and the second baseplate. Steps and methods for producing the electrochromic functional layer are not particularly limited, and may be selected by those skilled in the art according to specific conditions.

In some embodiments of the present disclosure, electrochromic materials for forming the electrochromic functional layer may include at least one selected from an organic electrochromic small molecule material, an organic polymer, and an inorganic electrochromic material. Therefore, the electrochromic functional layer has a wider source of materials. In some embodiments of the present disclosure, the inorganic electrochromic material may be transition metal oxide, prussian blue and the like, the organic electrochromic small molecule material may be viologens, and the organic polymer may be polyaniline, polythiophene and the like.

At block S700: the reinforcing substrate is removed to obtain the electrochromic device.

In some embodiments of the present disclosure, when the first baseplate and the second baseplate each are provided with the reinforcing substrate on the second surface thereof away from the electrochromic functional layer, the method may further include an operation of removing the reinforcing substrate. In some embodiments of the present disclosure, a binder layer is disposed between the reinforcing substrate and the substrate of the baseplate, and removing the reinforcing substrate includes removing the binder layer so as to separate the reinforcing substrate from the substrate of the baseplate. Therefore, a thinner electrochromic device with uniform color change can be obtained by the simple method.

In some embodiments of the present disclosure, when the support is made of a resin material, specifically, a soluble resin, after removing the reinforcing substrate, the method may further include: attaching the electrochromic device to a base, and then dissolviong the support made of the soluble resin. In this way, when the electrochromic device needs to be operated (such as an attaching action), the support can be used to keep the overall thickness of the electrochromic device uniform so as to prevent the serious deformation of the electrochromic layer during the operation, and after the operation is completed, the support may be removed to eliminate the influence of the support on the color change of the electrochromic device.

In some embodiments of the present disclosure, the baseplates (the first baseplate and the second baseplate) of the above-described electrochromic device may be large mother plates including a plurality of electrochromic units, and each mother plate includes a large reinforcing substrate and a substrate adhered to the large reinforcing substrate. After operations of providing the support, forming the electrochromic layer and encapsulating are completed, the large mother plates can be cut, and finally the reinforcing substrate is separated from the substrate by the manners including but not limited to dissolving the adhesive layer to obtain the above-described electrochromic device. Alternatively, for the above-mentioned baseplate, it is also possible to cut the large mother plate first, and then perform the operations of providing the support, forming the electrochromic layer and encapsulating. Similarly, after finally encapsulating the electrochromic layer, the reinforcing substrate is separated, so as to obtain a thinner electrochromic device.

In summary, by arranging a thinner substrate on the reinforcing substrate, the mechanical strength of the thinner substrate is enhanced by taking advantage of the supporting function of the reinforcing substrate, so that the thinner substrate can satisfy the process requirements for producing the electrochromic device, and thus a thinner electrochromic device is obtained. With this method, it just needs to provide the substrate on the reinforcing substrate, and then produce the electrochromic device by a conventional method, and finally remove the reinforcing substrate. Therefore, the method is easy to operate and will not adversely affect the electrochromic device. In addition, the method further includes providing a support on the baseplate to further improve the mechanical strength of the substrate, and after the reinforcing substrate is removed, the substrate can still be supported by the support to ensure the uniformity of the color change of the electrochromic device.

In a third aspect of the present application, there is provided a shell. In some embodiments of the present disclosure, the shell includes the electrochromic device as described above, and thus the shell has all the characteristics and advantages of the electrochromic device described above, which will not be elaborated here. In general, the shell has an appearance with uniform color and a thinner thickness, the appearance of the shell is variable and the color change is uniform, and the shell is not only applicable to planar equipment but also to curved equipment.

In some embodiments of the present disclosure, referring to Fig. 13 or Fig. 22, the shell 1000 may further include a transparent shell baseplate 600, and the electrochromic device is attached to the transparent shell baseplate 600 via an optical adhesive layer 400. Therefore, a shell with uniform color in appearance is obtained, and shell is thinner and its color change is uniform. It should be noted that an electrochromic device in which both baseplates are made of curved glass, an electrochromic device in which two baseplates are made of different materials, or an electrochromic device in which both baseplates are made of a flexible material can be attached to the shell baseplate via the optical adhesive layer, so as to obtain a shell with the uniform color in appearance.

In some embodiments of the present disclosure, the first baseplate 100 and the second baseplate 200 of the electrochromic device may both be made of curved glass, and in order to reduce the thickness of the shell, the first baseplate 100 or the second baseplate 200 of the electrochromic device may also be used as the shell baseplate. In this case, the optical adhesive layer and the release layer are not provided in the electrochromic device. In this way, the shell not only has uniform color in appearance, but also has a relatively thin thickness.

In some embodiments of the present disclosure, when the first baseplate 100 is made of a different material from that of the second baseplate 200, that is, for example, the first baseplate 100 is made of curved glass, while the second baseplate 200 is made of a flexible material, or the first baseplate 100 is made of a flexible material, while the second baseplate 200 is made of curved glass, the baseplate made of curved glass may also be used as the shell baseplate. In this case, the optical adhesive layer and the release layer are not provided in the electrochromic device. In this way, the shell not only has uniform color in appearance, but also has a relatively thin thickness.

In some embodiments of the present disclosure, referring to Fig. 13, when the first baseplate 100" and the second baseplate 200" are both made of a flexible material, the optical adhesive layer 400 is provided on a second surface of the second baseplate 200" away from the electrochromic functional layer 300, or the optical adhesive layer 400 is provided on a second surface of the first baseplate 100" away from the electrochromic functional layer 300 (this case is not shown in the figures), and the electrochromic device is attached to the shell baseplate 600 via the optical adhesive layer 400. Therefore, the shell not only has uniform color in appearance, but also has a relatively thin thickness. In some embodiments of the present disclosure, the shell baseplate 600 may have a planar structure or a curved structure. Therefore, both the planar shell and the curved shell can achieve uniform color change and may also have a thinner thickness.

In some embodiments of the present disclosure, when the first baseplate 100 and the second baseplate 200 are both made of a flexible material or thin glass, after removing the reinforcing substrate, the electrochromic device can be attached to the shell baseplate, so as to obtain a shell with a thin thickness and uniform color change.

It should be noted that the expression that the shell according to embodiments of the present disclosure includes the electrochromic device as described above should be understood broadly, that is, the shell may include the electrochromic device as described above as well as structures other than the electrochromic device. For example, the shell further includes the shell baseplate, and the electrochromic device is disposed on the shell baseplate. Alternatively, the first baseplate and the second baseplate may directly serve as the shell baseplate, that is, the shell in this case is composed of the electrochromic device.

In a fourth aspect of the present disclosure, there is provided electronic equipment. In some embodiments of the present disclosure, referring to Fig. 14, the electronic equipment 2000 includes the shell 1000 as described above and a main board. Therefore, the electronic equipment has all the characteristics and advantages of the shell described above, which will not be elaborated here. In general, the electronic equipment has an appearance with uniform color, it may be planar equipment or curved equipment, and its overall thickness is relatively thin.

In some embodiments of the present disclosure, the main board of the electronic equipment is provided with a control circuit, the control circuit is electrically connected with the electrochromic device in the shell. The control circuit may include a storage circuit and a processing circuit, and the storage circuit and the processing circuit may be a memory, such as a hard disk drive memory, a non-volatile memory (such as a flash memory or other electronic programmable read-only memory used to form a solid-state drive, etc.), a volatile memory (such as static or dynamic random access memory, etc.) and the like. Therefore, the usage function of the electronic equipment can be realized.

The present disclosure will be illustrated below in combination with the specific examples. It should be noted that the following examples are only used to illustrate the present disclosure and shall not be construed to limit the present disclosure. The example in which specific technology or conditions are not indicated shall be carried out according to the technology or conditions described in literatures in the related art or carried out according to the product specification.

### Example 1

First, a planar glass baseplate is selected, and then a first electrode layer is deposited on a first glass baseplate, and a second electrode layer is deposited on the second glass baseplate. A part of the first glass baseplate and the first electrode layer is etched to form a concave-convex structure, in which a concave part remains continuous, and a part of the first electrode layer located on a part of the first glass baseplate corresponding to a convex part is removed, while a part of the first electrode layer corresponding to the concave part is reserved. The part of the first glass baseplate corresponding to the convex part constitutes supports, and the supports have a thickness of 0.1 mm and a cross-sectional dimension of 0.15 mm, and are arranged in an array, and an interval between two adjacent supports is 3 mm. Then, a sealant is applied on the edge of the first glass baseplate, and the first glass baseplate and the second glass baseplate are encapsulated together, such that an accommodating space is defined between the two glass baseplates via the support. An opening for filling the organic electrochromic small molecule material is reserved during the encapsulation. Subsequently, the remaining material on the edges is cut and removed, an electrochromic layer is formed between the two baseplates by vacuum filling, and the electrochromic layer is filled in the accommodating space. Then, the opening is sealed, after which the operations of thinning the baseplates and bonding a flexible circuit board (using ACF (anisotropic conductive film) bonding) are performed.

### Example 2

The structure of the electrochromic device of this example is the same as that of Example 1, except that in this example, the first glass baseplate is etched to form a concave-convex structure first, such that a convex part constitutes the support, and then a conductive material is deposited on the first glass baseplate, and a part of the conductive material on the convex part is removed, so as to form the first electrode layer.

### Example 3

First, a planar glass baseplate is selected, and then a first electrode layer is deposited on a first glass baseplate, and a second electrode layer is deposited on the second glass baseplate. Subsequently, a photosensitive adhesive is printed on the first electrode layer to form columnar supports, the supports have a thickness of 0.1 mm and a cross-sectional dimension of 0.15 mm, and are arranged in an array, and an interval between two adjacent supports is 3 mm. The subsequent steps are the same as in Example 1.

### Example 4

First, a planar glass baseplate is selected, and then a first electrode layer is deposited on a first glass baseplate, and a second electrode layer is deposited on the second glass baseplate. Subsequently, a polystyrene film layer is deposited on the first electrode layer, and columnar supports are formed on the basis of the polystyrene film layer through a patterning process, the supports have a thickness of 0.1 mm and a cross-sectional dimension of 0.15 mm, and are arranged in an array, and an interval between two adjacent supports is 3 mm. The subsequent steps are the same as in Example 1.

### Example 5

The electrochromic device is composed of a first baseplate, a first electrode layer, an electrochromic layer, a second electrode layer, and a second baseplate stacked in sequence, and the electrochromic layer is made of an organic electrochromic small molecule material. The first electrode layer and the second electrode layer are both made of indium tin oxide, and the first baseplate and the second baseplate are both made of 3D glass. Specifically, an ITO (indium tin oxide) layer is deposited on the glass baseplate, and then etched by a yellow light to form the electrode layer. Then, a silver paste is printed to form wires so as to connect with an external circuit. Fixing structures are formed by a light curable adhesive and arranged on the ITO layer in an array, and an interval between two adjacent fixing structures is 3 mm. Supports are 0.05 mm glass beads and fixed on the first electrode layer through the fixing structures, and define an accommodating space between the two electrode layers, and the electrochromic layer is filled in the accommodating space. A sealant is applied on the edge of the first baseplate, the second baseplate and the first baseplate are encapsulated, and an opening for filling the electrochromic material is reserved during encapsulation. Subsequently, the remaining material on the edges is cut and removed; the electrochromic layer is formed between the two baseplates by vacuum filling. Then, the opening is sealed, after which the operations of thinning the baseplates and bonding a flexible circuit board (using ACF bonding) are performed.

### Example 6

The structure of the electrochromic device of this example is the same as that of Example 5, except that the first baseplate is made of 3D glass, the second baseplate is made of PET, and a thickness of the second baseplate is 0.05 mm.

### Example 7

The structure of the electrochromic device of this example is the same as that of Example 5, except that the first baseplate and the second baseplate are both made of PET, the thickness of the first baseplate and that of the second baseplate are both 0.05 mm, the second baseplate is sequentially provided with a binder layer and a reinforcing substrate on a surface thereof away from the first baseplate, and there is no baseplate thinning process.

### Example 8

The electrochromic device is composed of a first baseplate, a first electrode layer, an ion storage layer, an electrolyte layer, an electrochromic layer, a second electrode layer, and a second baseplate stacked in sequence, in which the electrochromic layer is made of an organic polymer, the first electrode layer and the second electrode layer are both made of indium tin oxide, and the first baseplate and the second baseplate are both made of 3D glass. Specifically, an ITO (indium tin oxide) layer is deposited on the glass baseplate, and then etched by a yellow light to form the electrode layer. Then, a silver paste is printed to form wires so as to connect with an external circuit. Fixing structures are formed by a light curable adhesive and arranged on the ITO layer in an array, and an interval between two adjacent fixing structures is 3 mm. Supports are 0.05 mm glass beads and fixed on the first electrode layer through the fixing structures, and a total thickness of the support and the fixing structure is less than the thickness of the electrochromic functional layer. The ion storage layer and the electrolyte layer are in contact with the supports, and the electrochromic layer covers the supports. Then, the operations of thinning the baseplates and bonding a flexible circuit board (using ACF bonding) are performed.

### Example 9

The structure of the electrochromic device of this example is the same as that of Example 8, except that the first baseplate is made of 3D glass, the second baseplate is made of PET, and a thickness of the second baseplate is 0.05 mm.

### Example 10

The structure of the electrochromic device of this example is the same as that of Example 8, except that the first baseplate and the second baseplate are both made of PET, the thickness of the first baseplate and that of the second baseplate are both 0.05 mm, the second baseplate is sequentially provided with a binder layer and a reinforcing substrate on a surface thereof away from the first baseplate, and there is no baseplate thinning process.

It should be particularly noted that in present disclosure, the terms "first" and "second" are used herein for purposes of distinction, and are not intended to indicate or imply relative importance or significance, and shall not be construed to limit the present disclosure

Specifically, in the electrochromic device according to embodiments of the present disclosure, the first baseplate and the second baseplate are only used to distinguish these two baseplates, and cannot be understood as a limitation to their locations, importance, materials and structures. Similarly, the first electrode layer and the second electrode layer according to embodiments of the present disclosure are only used to distinguish these two electrode layers. For the sake of description, the electrode layer disposed on the first baseplate is named as the first electrode layer, and the electrode layer disposed on the second baseplate is named as the second electrode layer.

Although embodiments and examples have been shown and described above, it would be appreciated by those skilled in the art that the above embodiments and examples are explanatory, and cannot be construed to limit the present disclosure, and changes, modifications, alternatives, and variants can be made in the embodiments without departing from the scope of the present disclosure.

## Claims

1. An electrochromic device, comprising:
a first baseplate;
a second baseplate opposite to the first baseplate;
a first electrode layer provided on the first baseplate and arranged between the first baseplate and the second baseplate;
a second electrode layer provided on the second baseplate and arranged between the first baseplate and the second baseplate; and
a support, fixed on a first surface of the first baseplate provided with the first electrode layer or a first surface of the second baseplate provided with the second electrode layer.

2. The electrochromic device according to claim 1, wherein the first baseplate and the second baseplate independently have a thickness of 0.05 to 0.5 mm.

3. The electrochromic device according to claim 1, wherein the first baseplate and the second baseplate are independently made of curved glass or a flexible material.

4. The electrochromic device according to any one of claims 1 to 3, further comprising:
an electrochromic functional layer disposed between the first baseplate and the second baseplate and in contact with the support.

5. The electrochromic device according to claim 4, further comprising:
an optical adhesive layer, disposed on a second surface of the first baseplate or the second baseplate away from the electrochromic functional layer; and
a release layer, disposed on a surface of the optical adhesive layer away from the electrochromic functional layer.

6. The electrochromic device according to claim 3, wherein the first baseplate and the second baseplate made of the flexible material independently have a thickness of 0.05 to 0.1 mm.

7. The electrochromic device according to claim 4, wherein an accommodating space is defined between the first baseplate and the second baseplate via the support, and the electrochromic functional layer is filled in the accommodating space.

8. The electrochromic device according to claim 4, wherein the electrochromic functional layer comprises a plurality of sublayers stacked in sequence, a thickness of the support is less than that of the electrochromic functional layer, and among the plurality of sublayers, a sublayer with strongest flowability is in contact with the support.

9. The electrochromic device according to any one of claims 1 to 8, wherein the first surface of the first baseplate provided with the first electrode layer or the first surface of the second baseplate provided with the second electrode layer has a concave-convex structure, and the support is formed by a convex part of the concave-convex structure.

10. The electrochromic device according to any one of claims 1 to 9, wherein the support is made of at least one material selected from glass, silicon and a polymer.

11. The electrochromic device according to claim 10, wherein the polymer comprises a resin, polystyrene or a photosensitive adhesive.

12. The electrochromic device according to any one of claims 1 to 11, wherein the support is spherical or columnar.

13. The electrochromic device according to claim 12, wherein the support comprises glass beads, silicon spheres or soluble resin beads.

14. The electrochromic device according to claim 12, wherein the support is columnar, and the support is made of the photosensitive adhesive or polystyrene.

15. The electrochromic device according to any one of claims 1 to 14, wherein the thickness of the support is in a range of 0.02 to 0.2 mm.

16. The electrochromic device according to any one of claims 1 to 15, wherein a cross-sectional dimension of the support is in a range of 0.02 to 0.2 mm.

17. The electrochromic device according to any one of claims 1 to 16, wherein the support is fixed via at least one fixing structure on the first surface of the first baseplate provided with the first electrode layer or on the first surface of the second baseplate provided with the second electrode layer.

18. The electrochromic device according to claim 17, wherein the fixing structure is a groove.

19. The electrochromic device according to claim 17, wherein the fixing structure is a bump.

20. The electrochromic device according to claim 19, wherein a cross section of the fixing structure is circular, elliptical, annular, quadrilateral or irregularly polygonal.

21. The electrochromic device according to claim 19, wherein the fixing structure comprises at least two limiting pillars spaced apart from each other, and a distance between two adjacent limiting pillars of the same fixing structure is suitable for accommodating and fixing the support.

22. The electrochromic device according to claim 19, wherein a thickness of the fixing structure is in a range of 5 to 10 µm.

23. The electrochromic device according to claim 18 or 19, wherein the fixing structures are arranged in an array, and a distance between two adjacent fixing structures is in a range of 0.5 mm to 1 cm.

24. The electrochromic device according to claim 19, wherein the fixing structure comprises an adhesive layer, and a material for forming the adhesive layer comprises at least one selected from a thermosetting adhesive, a hot melt adhesive, a light curable adhesive and a two-component adhesive.

25. The electrochromic device according to claim 17, wherein a cross-sectional area of the fixing structure is 30 to 50% of that of the support.

26. The electrochromic device according to claim 4, further comprising:
a reinforcing substrate, disposed via a binder layer on a second surface of at least one of the first baseplate and the second baseplate away from the electrochromic functional layer.

27. A method for producing an electrochromic device, comprising:
providing a first baseplate and a second baseplate;
providing a first electrode layer on the first baseplate and providing a second electrode layer on the second baseplate; and
fixing a support on a first surface of the first baseplate where the first electrode layer is provided or on a first surface of the second baseplate where the second electrode layer is provided.

28. The method according to claim 27, wherein the first baseplate and the second baseplate are independently made of curved glass or a flexible material.

29. The method according to claim 28, wherein the first baseplate and the second baseplate made of the flexible material independently have a thickness of 0.05 to 0.1 mm.

30. The method according to claim 27 or 28, wherein fixing the support on the first surface of the first baseplate or on the first surface of the second baseplate comprises:
etching the first baseplate or the second baseplate to form a concave-convex structure on the first surface of the first baseplate or on the first surface of the second baseplate, and a convex part of the concave-convex structure constituting the support.

31. The method according to any one of claims 27 to 29, wherein fixing the support on the first surface of the first baseplate or on the first surface of the second baseplate comprises:
providing a fixing structure on the first baseplate or the second baseplate;
dispersing the support on the one of the first baseplate and the second baseplate provided with the fixing structure; and
removing a part of the support not fixed by the fixing structure.

32. The method according to claim 31, wherein the fixing structure is a groove, and providing the fixing structure on the first baseplate or the second baseplate comprises:
etching, via a patterning process, at least one of the first electrode layer and the first baseplate or at least one of the second electrode layer and the second baseplate to form the groove.

33. The method according to claim 31, wherein the fixing structure is a bump, and the fixing structure is provided on the first baseplate or the second baseplate by spraying, screen printing, printing or etching.

34. The method according to claim 33, wherein the fixing structure comprises an adhesive layer, and after dispersing the support, the method further comprises:
curing the fixing structure so as to fix the support distributed on the fixing structure.

35. The method according to any one of claims 27 to 34, further comprising:
providing an electrochromic functional layer between the first baseplate and the second baseplate, and making the electrochromic functional layer in contact with the support.

36. The method according to claim 35, wherein an accommodating space is defined between the first baseplate and the second baseplate via the support, and the electrochromic functional layer is filled in the accommodating space.

37. The method according to claim 35, wherein the electrochromic functional layer comprises a plurality of sublayers stacked in sequence, a thickness of the support is less than that of the electrochromic functional layer, and among the plurality of sublayers, a sublayer with strongest flowability is in contact with the support.

38. The method according to claim 35, wherein a reinforcing substrate is attached via a binder layer to a second surface of at least one of the first baseplate and the second baseplate away from the electrochromic functional layer, and after the electrochromic functional layer is provided between the first baseplate and the second baseplate, the method further comprises:
removing the binder layer to separate the reinforcing substrate from the at least one of the first baseplate and the second baseplate.

39. A shell, comprising an electrochromic device according to any one of claims 1 to 26.

40. The shell according to claim 39, further comprising a transparent shell baseplate, wherein the first baseplate and the second baseplate are each made of a flexible material, and the electrochromic device is attached to the transparent shell baseplate via an optical adhesive layer.

41. An electronic equipment, comprising a shell according to claim 39 or 40 and a main board, wherein the main board is provided with a control circuit, and the control circuit is electrically connected with an electrochromic device in the shell.
